# EUROPEAN PATENT SPECIFICATION

(11) **EP 0 896 183 B1**
(45) Date of publication and mention of the grant of the patent: **19.12.2001**
(21) Application number: 97113387.1
(22) Date of filing: 04.08.1997
(51) Int. Cl.: F16L 53/00, A23G 7/00, A23G 9/22, A23G 9/30

(54) **Temperature conditioned deformable coupling member**
Temperierte, deformierbare Kupplung
Accouplement déformable conditionné thermiquement

(43) Date of publication of application: 10.02.1999
(73) Proprietor: SOREMARTEC S.A., 6700 Arlon-Schoppach (BE); Ferrero S.p.A., 12051 Alba (Cuneo) (IT); FERRERO OFFENE HANDELSGESELLSCHAFT m.b.H., 60599 Frankfurt (DE)
(72) Inventor: Longo, Marco, 12042 Bra (Cuneo) (IT)
(74) Representative: Rambelli, Paolo

(56) References cited:
- EP-A- 0 323 734
- FR-A- 2 605 273
- US-A- 4 449 853
- US-A- 5 522 453

## Description

The present invention concerns a deformable coupling member according to the preamble of Claim 1. It concerns members usually known in the art as "expansion compensators", constituted by tubes through which a fluid can flow and intended to interconnect two bodies capable of at least a small relative movement, for example, in the food industry such members are used to connect tanks, chambers or containers disposed on weighing units, of the type usually known as "load cells", to their fixed support and housing structures. In such use, the movement to which the coupling member must adapt, which is usually fairly limited, is that which the container or tank of the load cell effects in moving relative to the fixed structure due to the fact that it is mounted on an assembly of elements which can, in fact, be likened (in a representation which is significantly simplified but not substantially different from reality) to the plate or pan of a balance or weighing machine.

The term expansion compensator usually adopted for the members in question takes into account the fact that members of this type are often utilised in all situations in which a member is needed which is capable, due to its deformability or flexibility, of adapting to any relative movements of the connected parts, such as those which may result from, for example, thermal expansion.
In particular, in relation to the food product field (the reference to this field must not, however, be interpreted as limiting the application of the invention which is entirely general), members of the type described above must have further characteristics, such as, for example:
- the possibility of being temperature conditioned (in the sense of heating as well as in the sense of possible cooling), sometimes within very narrow temperature-tolerance ranges: one may think, for example, of the possible conveyance of molten chocolate which must be maintained within a precise temperature range in order to avoid degeneration;
- the material conveyed must not accumulate on the wall of the duct defined within the member and this must, therefore, be easy to clean to satisfy obvious hygienic requirements.

The existence of these requirements easily explains the reason for the use of coupling members (expansion compensators) constituted by a tube having a circumferentially ribbed wall (for example, so-called helical or "coiled" tubes) being generally unsatisfactory, especially in the food product field.

A further fact which must be taken into account is that the tube constituting the coupling member must preferably not be subjected to mechanical stresses in the sense of an appreciable variation in the pressure on the wall thereof.

EP-A-0 323 734 describes a deformable coupling member according to the preamble of Claim 1, comprising a helically convoluted tube or liner having wound in the roots of the external or internal convolutions thereof a heating member.

The object of the present invention is to realise a coupling member of the type described above which is able to satisfy excellently all of the requirements discussed above.

According to the present invention, this object is achieved by virtue of a coupling member having the characteristics claimed in Claim 1.

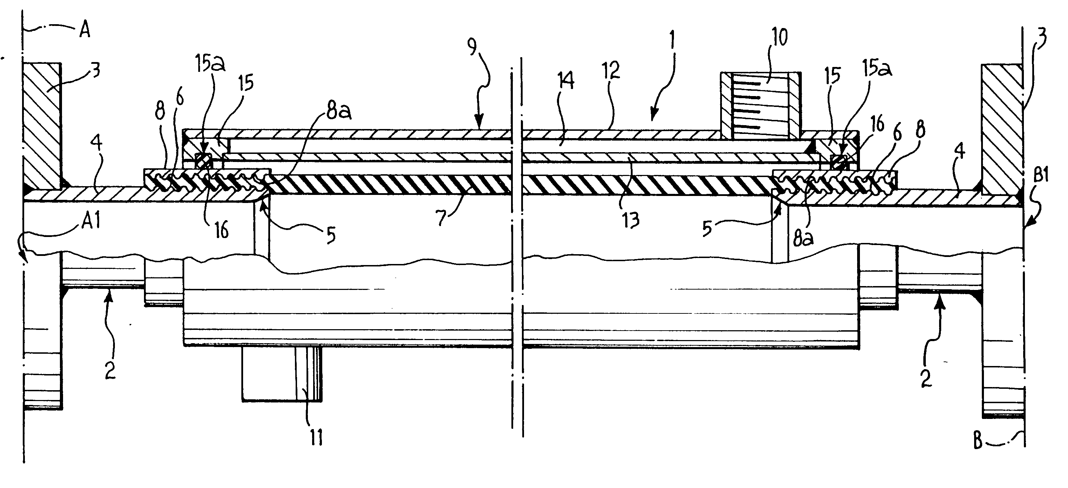

The invention will now be described, purely by way of non-limitative example, with reference to the accompanying drawings, comprising a single figure which shows an embodiment of the invention in axial section.

In the drawing, the reference numeral 1 generally indicates a deformable coupling member or "expansion compensator". For the intended meaning of this term, reference should be made to the introduction to the present description.

The coupling member 1 is intended to be interposed between two structures (usually, two bodies A, B) capable of limited relative movement such as, for example, that caused by thermal expansion or, again by way of example, the translational movement effected by the tank or container of a so-called load cell relative to its housing and support structure. In each case, the aforesaid movement is, in general, a relative movement: it may therefore arise from the movement of a movable element relative to a fixed element, or from the movement of both connected elements.

The reference numeral 2 indicates two connector parts (unions), forming the two ends of the member 1, intended to be connected - usually in fluid-tight conditions - to the two relatively movable bodies A, B.

Essentially each union 2 consists of an annular flange 3 connectable to the respective body A or B (for example, by means of screws or bolts which pass through holes in the flanges 3, which holes are not represented explicitly in the drawing) around a respective aperture A1, B1 for the inflow/outflow of a fluid, and intended to be aligned axially with a tubular portion 4 of the union 2 carrying the flange 3 connected to one of its ends.

The internal and/or external surfaces of the mutually-facing end portions of the tubular portions 4 are specially shaped.

In particular, the internal surface is shaped as a flared mouth 5 which flares outwardly towards the end of the tubular portion 4.

However, the external surface has superficial shaping in the form, for example, of a number of circumferential grooves 6 or threading (with one or more starts).

For clarity, it is emphasised that, in any alternative embodiments of the invention, which may be advantageous in particular conditions of use, only the flared mouth 5 formed on the internal surface or the superficial shaping 6 of the external surface may be present.

The particular shaping of the internal and/or external surfaces of the end portion of the tubular portions 4 opposite the flange 3 is intended to facilitate the disposition of a tube 7, preferably constituted by rubber or similar plastics material (possibly of the type having a reinforced wall), so as to interconnect the two end unions 2.

The tube 7, at least the inner surface of which is preferably formed from a material approved for contact with food products, is coupled (preferably fitted) at its opposite ends to the tubular portions 4 of the end unions 2.

The tube 7 has a smooth internal wall surface. This characteristic, together with the generally smooth shape of the internal surfaces of the tubular portions 4 and, preferably, the presence of the flared mouths 5, means that the axial duct through the member 1, as seen starting from the end aperture of one of the flanges 3 and continuing to the end aperture or exterior of the other flange 3, is in the form of a duct with a generally smooth wall which has no unevenness or steps which would give rise to possible dead zones in which the material (for example, a fluid food product) conveyed through the duct itself could stagnate. This is also true of the zones at which the internal ends of the tubular portions 4 are connected to the tube 7 due to the presence of the flared mouths 5 which act as connector portions.

An almost equivalent result can be achieved in the absence of the flared mouths 5 by conical tapering of the external surfaces of the end zones of the tubular portions 4.

The presence of the superficial shaping 6 is such as to make the coupling of the tube 7 to the tubular portions 4 particularly firm and reliable, even in the presence of traction, bending and twisting forces which can arise when the member 1 is in use. To this end, the connections at the ends of the tube 7 are preferably reinforced by the provision of associated sleeves 8, the inner surfaces of which are preferably shaped, as shown at 8, substantially to correspond with the shaping 6 (grooves, threading etc ...).

The sleeves 8, like the end unions 2, are preferably formed from a rigid material. The rigid material in question may be metal such as, for example, steel. Although not limiting, this choice is advantageous especially in terms of ensuring the cleanliness of the member 6 and the distribution of heat for the temperature conditioning of the member 1 and the duct itself.

In order to achieve the aforesaid conditioning effect (it should be remembered that this can either be in the form of a heating effect or of a cooling effect), a tubular, double-walled jacket 9 with associated inlet and outlet connectors 10, 11 respectively for a diathermic fluid (for example, water or oil for heating) is provided around the assembly of parts described above.

As stated, the jacket 9 is preferably constituted by a double-walled jacket, thus, by a tubular outer wall 12 and a similarly tubular inner wall 13 which together define a chamber 14 of circular-ring section, closed at the ends of the two jackets 12 and 13 by two annular plugs 15. Preferably, the walls 12 and 13 (or at least the inner wall 13 facing the tube 7) are formed from a rigid material which is a good heat conductor (for example, steel). A similar choice may also be made for the annular plugs 15 which may then be welded to the jackets 12 and 13. The plugs 15 each have a retaining element 16, similarly annular, of the type currently known as an O-ring, preferably housed in respective annular recesses 15a formed in the inner surfaces of the plugs 15. The O-rings are intended to form a seal between the heating jacket 9 and the sleeves 8 fitted to the ends of the tube 7, avoiding any penetration of various materials (particles, liquids etc) into the annular space between the tube 7 and the jacket 9.

It will be appreciated that this seal, formed by a deformable resilient element such as an O-ring 16, is such that it does not prevent the possible relative movement between the jacket 9 and the sleeves 8. These latter are in fact fixed to the end parts 3 in that they are firmly fitted (with the interposition of the ends of the tube 7) on to the tubular portions 4. The aforesaid relative movement may be in the sense of a limited translation in a single direction over the entire circumferential extent of the O-ring 16 (when the relative movement of the end parts 3 is in the form of a separation or moving closer together), or in opposite directions in correspondence with contiguous portions of the O-ring 16 when the aforesaid relative movement is in the form of a relative translation in the direction of the planes defined by the flanges 3 (approximately parallel to each other).

The use of the jacket 9 for the temperature conditioning of the coupling member 1 is advantageous compared with the use of electrical heating elements.

A primary advantage is that it is not necessary to provide an independent electrical supply for the heating elements, with the corresponding requirement of ensuring the electrical insulation of the various metal parts of the element in question. A second advantage is that the structure according to the invention lends itself easily to temperature conditioning in the cooling sense, which can be effected by providing a cooling liquid within the chamber 14.

It will also be appreciated that the aforesaid chamber 14 is located between the tubular walls 12 and 13 and is therefore a closed chamber which is not in a force (pressure)-transmitting relationship with the wall of the ducts defined by the coupling member 1, specifically with the wall of the tube 7 which, due to the fact that the tube is formed from a deformable material, could be exposed to undesirable pressures.

Naturally, the principle of the invention remaining the same, the details of manufacture and the variants may be widely varied with respect to that described and illustrated, without by this departing from the ambit of the invention as defined in the following claims.

## Claims

1. A deformable coupling member for coupling two bodies (A,B) in fluid-conveying relationship, which bodies are able to move relative to each other, comprising:
- two end unions (2), each having means (3) for coupling to a respective one of the two bodies (A, B) ; the end unions having respective facing tubular portions (4) able to convey the fluid;
- a defcrmable tube (7) through which the fluid can pass having two ends coupled to respective ones of the facing tubular portions (4); and
- a substantially tubular temperature conditioning jacket (9) provided with a chamber (14) for the supply of a diathermic fluid for the thermal conditioning of the coupling member (1); **characterised in that** the jacket (9) surrounds the deformable tube (7) without being able to transmit force thereto, and is supported at its ends by the respective tubular portions (4) of the end unions (2) so as to be able to move relative to the tubular portions (4) themselves.

2. A coupling member according to Claim 1, **characterised in that** the coupling means include an annular flange (3).

3. A coupling member according to Claim 1 or Claim 2, **characterised in that** the tubular portions (4) have smooth inner walls.

4. A coupling member according to any preceding claim, **characterized in that** the tubular portions (4) have respective flared mouths (5) at their facing ends.

5. A coupling member according to any preceding claim, **characterised in that** the outer surfaces of the facing ends of the tubular portions (4) have superficial shaping (6) able to strengthen the deformable tube (7) when coupled with the tubular portions (4).

6. A coupling member according to Claim 5, **characterised in that** the superficial shaping (6) is chosen from the group constituted by annular grooves and threading.

7. A coupling member according to Claim 1, **characterised in that** the deformable tube has a smooth inner wall.

8. A coupling member according to Claim 1 or Claim 7, **characterised in that** the deformable tube is constituted by a tube of plastics material or rubber.

9. A coupling member according to any of Claims 1, 7 and 8, **characterised in that** at least the inner wall of the deformable tube is constituted by a material compatible with contact with food products.

10. A coupling member according to Claim 1, **characterised in that** the temperature-conditioning jacket (9) comprises two tubular walls (12, 13) which define the aforesaid chamber (14) between them.

11. A coupling member according to Claim 10, **characterised in that** at least the tubular wall (13) defining the inner wall of the temperature conditioning jacket (9) is of a material which is a good heat conductor.

12. A coupling member according to Claim 1, **characterised in that** the temperature-conditioning jacket (9) is supported by the tubular portions (4) with the interposition of annular sealing elements (16).

13. A coupling member according to Claim 1, **characterised in that** the ends of the deformable tube (7) are strengthened at their positions of coupling with the facing tubular portions (4) by respective sleeves (8) which grip the ends of the deformable tube (7).

14. A coupling member according to Claim 13, **characterised in that** the inner surfaces of the sleeves (8) have special shaping (8a).

15. A coupling member according to Claim 14, **characterised in that** the special shaping (8a) is chosen from the group comprising annular grooves and threading.

16. A coupling member according to Claim 12 and any of Claims 13 to 15, **characterised in that** the annular sealing elements (16) are interposed between the ends of the temperature-conditioning jacket (9) and the said sleeves (8).

17. A coupling member according to Claim 12 and any of Claims 13 to 16, **characterised in that**:
- the temperature-conditioning jacket (9) has annular recesses (15a) in its internal end surfaces; and
- the annular sealing elements (16) are housed in the recesses (15a).

18. A coupling member according to Claim 10 and Claim 17, **characterised in that** the tubular walls (12, 13) are connected together at the ends of the temperature-conditioning jacket (9) by associated annular plugs (15), and the said recesses (15a) are provided in the annular plugs (15).

## Patentansprüche

1. Deformierbares Verbindungselement zum Verbinden zweier Körper (A,B) in fluidförderndem Verhältnis, wobei die Körper sich relativ zueinander bewegen können, umfassend:
- zwei Endanschlüsse (2), die jeweils Mittel (3) zum Verbinden zu einem jeweiligen der zwei Körper (A,B) haben; wobei die Endanschlüsse jeweilige aufeinander gerichtete röhrenförmige Bereiche (4) haben, die das Fluid fördern können;
- ein deformierbares Rohr (7), durch das das Fluid gelangen kann, das zwei Enden mit jeweiligen der aufeinander gerichteten röhrenförmigen Bereiche (4) verbunden hat; und
- einem im wesentlichen röhrenförmigen temperierenden Mantel (9), der mit einer Kammer (14) zur Zufuhr eines diathermischen Fluids für das thermische Einstellen des Verbindungselements (1) versehen ist;
**dadurch gekennzeichnet, dass** der Mantel (9) das deformierbare Rohr (7) umfasst, ohne dass er Kraft darauf übertragen kann; und an seinen Enden durch die jeweiligen röhrenförmigen Bereiche (4) der Endanschlüsse (2) gelagert wird, so dass er sich relativ zu den röhrenförmigen Bereichen (4) selbst bewegen kann.

2. Verbindungselement nach Anspruch 1, **dadurch gekennzeichnet, dass** das Verbindungsmittel einen ringförmigen Flansch (3) umfasst.

3. Verbindungselement nach Anspruch 1 oder Anspruch 2,
**dadurch gekennzeichnet, dass** die röhrenförmigen Bereiche (4) glatte innere Wände haben.

4. Verbindungselement nach einem der vorhergehenden Ansprüche, **dadurch gekennzeichnet, dass** die röhrenförmigen Bereiche (4) jeweilige abgeschrägte Öffnungen (5) an ihren aufeinander gerichteten Enden haben.

5. Verbindungselement nach einem der vorhergehenden Ansprüche, **dadurch gekennzeichnet, dass** die äußeren Oberflächen der aufeinander gerichteten Enden der röhrenförmigen Bereiche (4) eine Oberflächengestalt (6) haben, die das deformierbare Rohr (7) stärken kann, wenn es mit den röhrenförmigen Bereichen (4) verbunden ist.

6. Verbindungselement nach Anspruch 5, **dadurch gekennzeichnet, dass** die Oberflächengestalt (6) aus einer Gruppe ausgewählt wird, die durch ringförmige Nuten und Gewinde gebildet wird.

7. Verbindungselement nach Anspruch 1, **dadurch gekennzeichnet, dass** das deformierbare Rohr eine glatte innere Wand hat.

8. Verbindungselement nach Anspruch 1 oder Anspruch 7, **dadurch gekennzeichnet, dass** das deformierbare Rohr durch ein Rohr aus Kunststoffmaterial oder Gummi gebildet wird.

9. Verbindungselement nach einem der Ansprüche 1, 7 und 8, **dadurch gekennzeichnet, dass** zumindest die innere Wand des deformierbaren Rohrs durch Material gebildet wird das kompatibel für den Kontakt mit Lebensmitteln ist.

10. Verbindungselement nach Anspruch 1, **dadurch gekennzeichnet, dass** der temperierende Mantel (9) zwei röhrenförmige Wände (12, 13) umfasst, die die vorher erwähnte Kammer (14) zwischen ihnen definieren.

11. Verbindungselement nach Anspruch 10, **dadurch gekennzeichnet, dass** zumindest die röhrenförmige Wand (13), die die innere Wand des temperierenden Mantels (9) bildet, aus einem Material ist, das ein guter Wärmeleiter ist.

12. Verbindungselement nach Anspruch 1, **dadurch gekennzeichnet, dass** der temperierende Mantel (9) durch die röhrenförmigen Bereiche (4) unter Zwischenschalten von ringförmigen Dichtelementen (16) gelagert ist.

13. Verbindungselement nach Anspruch 1, **dadurch gekennzeichnet, dass** die Enden des deformierbaren Rohrs (7) an ihren Verbindungspositionen mit den aufeinander gerichteten röhrenförmigen Bereichen (4) durch jeweilige Rohrstücke (8) verstärkt werden, die die Enden des deformierbaren Rohrs (7) greifen.

14. Verbindungselement nach Anspruch 13, **dadurch gekennzeichnet, dass** die inneren Oberflächen der Rohrstücke (8) eine spezielle Formgebung (8a) haben.

15. Verbindungselement nach Anspruch 14, **dadurch gekennzeichnet, dass** die spezielle Formgebung (8a) aus der Gruppe ausgewählt wird, die ringförmige Nuten und Gewinde umfasst.

16. Verbindungselement nach Anspruch 12 und einem der Ansprüche 13 bis 15, **dadurch gekennzeichnet, dass** die ringförmigen Dichtelemente (16) zwischen die Enden des temperierenden Mantels (9) und der Rohrstücke (8) geschaltet sind.

17. Verbindungselement nach Anspruch 12 und einem der Ansprüche 13 bis 16, **dadurch gekennzeichnet, dass**:
- der temperierende Mantel (9) ringförmige Aussparungen (15a) in seinen inneren Endoberflächen hat; und
- die ringförmigen Dichtelemente (16) in den Aussparungen (15a) untergebracht sind.

18. Verbindungselement nach Anspruch 10 und Anspruch 17, **dadurch gekennzeichnet, dass** die röhrenförmigen Wände (12, 13) miteinander an den Enden des temperierenden Mantels (9) durch zugehörige ringförmige Stöpsel (15) verbunden sind und die Aussparungen (15a) in den ringförmigen Stöpseln (15) vorgesehen sind.

## Revendications

1. Elément d'accouplement déformable destiné à accoupler deux corps (A, B) dans une relation de transport de fluide, lesquels corps peuvent se déplacer l'un par rapport à l'autre, comportant :
- deux raccords unions d'extrémité (2), ayant chacun un moyen (3) pour un accouplement à l'un, respectif, des deux corps (A, B) ; les raccords unions d'extrémité ayant des parties tubulaires opposées respectives (4) pouvant transporter le fluide ;
- un tube déformable (7) dans lequel le fluide peut passer, ayant deux extrémités accouplées aux parties tubulaires opposées respectives (4) ; et
- une chemise sensiblement tubulaire (9) de conditionnement en température pourvue d'une chambre (14) pour la fourniture d'un fluide diathermique pour le conditionnement thermique de l'élément d'accouplement (1) ;
**caractérisé en ce que** la chemise (9) entoure le tube déformable (7) sans pouvoir lui transmettre une force, et est supportée, à ses extrémités, par les parties tubulaires respectives (4) des raccords unions (2) d'extrémité afin de pouvoir se déplacer par rapport aux parties tubulaires (4) elles-mêmes.

2. Elément d'accouplement selon la revendication 1, **caractérisé en ce que** les moyens d'accouplement comprennent une bride annulaire (3).

3. Elément d'accouplement selon la revendication 1 ou la revendication 2, **caractérisé en ce que** les parties tubulaires (4) ont des parois intérieures lisses.

4. Elément d'accouplement selon l'une quelconque des revendications précédentes, **caractérisé en ce que** les parties tubulaires (4) ont des embouchures évasées respectives (5) à leurs extrémités en vis-à-vis.

5. Elément d'accouplement selon l'une quelconque des revendications précédentes, **caractérisé en ce que** les surfaces extérieures des extrémités en vis-à-vis des parties tubulaires (4) ont une configuration superficielle (6) pouvant renforcer le tube déformable (7) lorsqu'il est accouplé aux parties tubulaires (4).

6. Elément d'accouplement selon la revendication 5, **caractérisé en ce que** la configuration superficielle (6) est choisie dans le groupe constitué par des gorges annulaires et un filetage.

7. Elément d'accouplement selon la revendication 1, **caractérisé en ce que** le tube déformable comporte une paroi intérieure lisse.

8. Elément d'accouplement selon la revendication 1 ou la revendication 7, **caractérisé en ce que** le tube déformable est constitué par un tube de matière plastique ou de caoutchouc.

9. Elément d'accouplement selon l'une quelconque des revendications 1, 7 et 8, **caractérisé en ce qu'**au moins la paroi intérieure du tube déformable est constituée par une matière compatible avec un contact avec des produits alimentaires.

10. Elément d'accouplement selon la revendication 1, **caractérisé en ce que** la chemise (9) de conditionnement en température comporte deux parois tubulaires (12, 13) qui définissent entre elles la chambre précitée (14).

11. Elément d'accouplement selon la revendication 10, **caractérisé en ce qu'**au moins la paroi tubulaire (13) définissant la paroi intérieure de la chemise (9) de conditionnement en température est en une matière qui est bonne conductrice de la chaleur.

12. Elément d'accouplement selon la revendication 1, **caractérisé en ce que** la chemise (9) de conditionnement en température est supportée par les parties tubulaires (4) avec interposition d'éléments annulaires (16) d'étanchéité.

13. Elément d'accouplement selon la revendication 1, **caractérisé en ce que** les extrémités du tube déformable (7) sont renforcées dans leurs positions d'accouplement avec les parties tubulaires en vis-à-vis (4) par des manchons respectifs (8) qui enserrent les extrémités du tube déformable (7).

14. Elément d'accouplement selon la revendication 13, **caractérisé en ce que** les surfaces intérieures des manchons (8) ont une configuration spéciale (8a).

15. Elément d'accouplement selon la revendication 14, **caractérisé en ce que** la configuration spéciale (8a) est choisie dans le groupe comprenant des gorges annulaires et un filetage.

16. Elément d'accouplement selon la revendication 12 et l'une quelconque des revendications 13 à 15, **caractérisé en ce que** les éléments annulaires (16) d'étanchéité sont interposés entre les extrémités de la chemise (9) de conditionnement en température et lesdits manchons (8).

17. Elément d'accouplement selon la revendication 12 et l'une quelconque des revendications 13 à 16, **caractérisé en ce que** :
- la chemise (9) de conditionnement en température présente des évidements annulaires (15a) dans ses surfaces extrêmes intérieures ; et
- les éléments annulaires (16) d'étanchéité sont logés dans les évidements (15a).

18. Elément d'accouplement selon la revendication 10 et la revendication 17, **caractérisé en ce que** les parois tubulaires (12, 13) sont reliées entre elles aux extrémités de la chemise (9) de conditionnement en température par des obturateurs annulaires associés (15), et lesdits évidements (15a) sont prévus dans les obturateurs annulaires (15).
